# EUROPÄISCHE PATENTSCHRIFT

(11) **EP 1 806 000 B1**
(45) Veröffentlichungstag und Bekanntmachung des Hinweises auf die Patenterteilung: **11.09.2013**
(21) Anmeldenummer: 05791112.5
(22) Anmeldetag: 21.09.2005
(51) Int. Cl.: H04N 9/31, G09B 9/32, G09B 9/36, G03B 21/00

(54) **SICHTSYSTEM**
VISION SYSTEM
SYSTEME DE VISION

(30) Priorität: 26.10.2004 DE 102004052102
(43) Veröffentlichungstag der Anmeldung: 11.07.2007
(73) Patentinhaber: Rheinmetall Defence Electronics GmbH, 28309 Bremen (DE)
(72) Erfinder: BURGGRAF, Hubert, 28876 Oyten (DE); PLASS, Wilfried, 28329 Bremen (DE); PASCHOLD, Michael, 27251 Neuenkirchen (DE); BORN, Hans, 28209 Bremen (DE)
(74) Vertreter: Greif, Thomas
(86) Internationale Anmeldenummer: PCT/EP2005/010173
(87) Internationale Veröffentlichungsnummer: WO 2006/045381

(56) Entgegenhaltungen:
- EP-A- 0 443 793
- EP-A- 1 241 652
- WO-A-98/24240
- FR-A- 2 711 808
- US-A- 5 380 204
- US-B1- 6 196 845
- ANONYMOUS: "STN ATLAS Laser-Sichtsystem für Tornado-Flugsimulatoren"[Online] 11. Juli 2003 (2003-07-11), XP002363494 Gefunden im Internet: URL:http://www.rheinmetall-detec.de/index. php?lang=2&fid=591> [gefunden am 2006-01-18]

## Beschreibung

### Technisches Gebiet

Die Erfindung betrifft ein Sichtsystem zur Darstellung synthetisch generierter Bilder für die Stimulation von Nachtsichtgeräten, insbesondere in Übungssimulatoren zum Trainieren des Führens von Fahr- und Fluggeräten sowie von Aufklärungs- und Observationsopera-tionen unter Nachtsichtbedingungen, der im Oberbegriff des Anspruchs 1 definierten Gattung. Unter Nachtsichtgeräten werden sowohl Wärmebildkameras, die meist fahrzeugfest installiert sind, als auch Nachtsichtbrillen und Ferngläser mit Restlichtverstärker, die von Personen getragen werden, verstanden.

### Stand der Technik

Bei einem bekannten, mit einem Nachtsichtgerät zum Trainieren des Nachtflugs ausgestatteten Flugsimulator (US 5 380 204) generiert ein Bildgenerator Videosignale eines synthetischen Bildes, das auf einer Display-Anordnung, bestehend aus mehreren Bildschirmen, dargestellt wird. Bevorzugt werden die Bildschirme von Kathodenstrahlröhren (CRT-Displays) eingesetzt, doch können auch Projektionsschirme von Fernseh-Projektoren zum Einsatz kommen. Die verschiedenen Bildschirme können von dem Flugschüler durch eine Nachtsichtbrille hindurch betrachtet werden, die einen Lichtemp-findlichkeitsbereich in sichtbaren und im nahen infraroten Spektralbereich bis 920 nm aufweist. Von dem Bildgenerator wird ein monochromatisches Bild erzeugt und auf den CRT-Displays dargestellt. Den CRT-Displays oder der Nachtsichtbrille sind Graufilter zur Abschwächung der Bildhelligkeit vorgeordnet, so dass der Dynamikbereich der CRT-Displays nach unten, also zu geringerer Helligkeit hin, verschoben wird.

Bei einem bekannten Sichtsystem zur Stimulation einer realen Nachtsichtbrille (US 6 196 845 B1) wird mit einem zusätzlichen Projektionskanal ein hochaufgelöstes und helleres Nachsichtbild als sog. "Projektionspatch" in der jeweils aktuellen Blickrichtung auf den Bildschirm projiziert. Dabei wird der Kontrast des "Projektionspatches" mittels nahinfraroten Videosignalen verfälscht, um der Nachtsichtbrille ein typisches Nahinfrarot-Bild anzubieten und damit die spektrale Charakteristik der Nachtsichtbrille zu simulieren. Der zusätzliche Projektionskanal setzt voraus, dass auf den Bildschirm ein sog. OTW(out of the window)-Bild und ein Grünbild für die direkte Sicht mit bloßem Auge projiziert wird, wobei das OTW-Bild ebenfalls von dem Bildgenerator erzeugt und über einen weiteren Projektionskanal dargeboten wird.

WO 98/24240 beschreibt einen Laserprojektor, der im unsichtbaren Spektralbereich eines Nachtsichtgeräts operiert.

### Darstellung der Erfindung

Der Erfindung liegt die Aufgabe zugrunde, ein Sichtsystem mit Nachtsichtgerät-Einsatz zu schaffen, bei dem eine von dem Vorhandensein zusätzlicher Projektionsbilder auf dem Projektionsschirm, wie OTW-Projektionsbild oder OTW- und Grünprojektionsbild, unabhängige Sicht durch das Nachtsichtgerät erreicht wird.

Die Aufgabe ist durch die Merkmale des Anspruchs 1 gelöst.

Das erfindungsgemäße Sichtsystem hat den Vorteil, dass das erfindungsgemäße Sichtsystem wahlweise sowohl als Stand-alone-Gerät ausschließlich für die Stimulation des Nachtsichtgeräts, als auch als Add-on-Gerät zusätzlich bei einer Simulation von mit dem bloßen Auge sichtbaren Nachtsichtszenen in sog. OTW-Bildern eingesetzt werden kann. Der technische Aufwand des erfindungsgemäßen Sichtsystems ist im Vergleich zu dem bekannten Sichtsystem mit Nachtsichteigenschaften sehr gering, da für die Nachtsicht nicht auch noch zusätzliche OTW-Bilder und Grünbil der generiert und auf den Projektionsschirm projiziert werden müssen. Bei Einsatz als Add-on-Gerät kann das für das Nichtsichtgerät generierte Infrarot-Bild auf dem gleichen Projektionsschirm in gleicher Größe wie das OTW-Bild projiziert werden, da es für das bloße Auge nicht sichtbar ist und nur mit dem Nachtsichtgerät gesehen werden kann. Dadurch kann auf den technisch aufwendigen "Head-Tracker" für die augenpunktrichtige Projektion des sog. Projektionspatch verzichtet werden, der bei dem eingangs genannten bekannten Sichtsystem unerlässlich ist. Da sowohl das momentane OTW-Bild augenpu nktbezogen generiert wird und ebenso das Projektionsbild für das Nachtsichtgerät auf den gleichen Augenpunkt bezogen, kann der Betrachter durch Schwenken des Kopfes alle Bereiche des Projektionsschirms mit dem Nachtsichtgerät betrachten, ohne dass das generierte Bild verändert werden muss.

Zweckmäßige Ausführungsformen des erfindungsgemäßen Sichtsystems mit vorteilhaften Weiterbildungen und Ausgestaltungen der Erfindung ergeben sich aus den weiteren Ansprüchen.

Gemäß einer bevorzugten Ausführungsform der Erfindung ist dem Nachtsichtgerät ein an die Lichtwellenlänge der Laserquelle angepasstes, schmalbandiges Interferenzfilter vorgesetzt. Durch das mit seiner Transmissionswellenlänge auf die Lichtwellenlänge der Laserquelle abgestimmte, schmalbandige Interferenzfilter, dessen Schmalbandigkeit an die Stabilität der Laserquelle angepasst ist, kann das projizierte Bild durch das Nachtsichtgerät hindurch von Umwelteinflüssen, wie z.B. Streu- und Fremdlicht oder einem mit dem bloßen Auge sichtbaren OTW-Projektionsbild, separiert und ungestört mit guter Stimulation des Nachtsichtgerätes gesehen werden. Durch Ausblenden des Fremdlichtes kann das zur Stimulation des Nachtsichtgerätes projizierte Bild zusammen mit einem die Nachtszenen simulierten, sichtbaren OTW-Bild auf dem gleichen Bildschirm dargestellt werden, ohne dass Manipulationen bezüglich der Helligkeit des OTW-Bildes oder des Simulationsraums vorgenommen werden müssen. Dem Sichtsystemnutzer können somit zwei verschiedene Bilder zeitgleich angeboten werden, eines als Bild durch das Nachtsichtgerät und eines als OTW-Bild für das bloße Auge. Dies ist vorteilhaft, da im realen Betrieb Blickmöglichkeiten sowohl durch das Nachtsichtgerät als auch am Nachtsichtgerät vorbei nach unten und seitlich durch die Fenster einer Flugzeugkanzel oder eines Führerstandes hindurch und auf die Cockpit-Instrumente (periphere Sicht) gegeben sind. Für bestimmte Anwendungsfälle ist es ebenfalls möglich, dem Nutzer durch das Nachtsichtgerät ein von dem mit dem bloßen Auge sichtbaren OTW-Bild auch inhaltlich völlig abweichendes Bild anzubieten. Für das Nachtsichttraining braucht der Simulationsraum nicht abgedunkelt zu werden, da Fremd- und Streulichteinflüsse durch das Interferenzfilter unterdrückt werden, und auch das projizierte OTW-Bild beeinträchtigt nicht den durch das Nachtsichtgerät hindurch sichtba ren Bildausschnitt.

Gemäß einer vorteilhaften Ausführungsform der Erfindung ist die Laserquelle des Projektors eine Laserdiode, die direkt und einfach leistungsmoduliert werden kann. Desweiteren ermöglicht die Laserdiode ein geringes Gewicht und Volumen sowie geringe Gestehu ngskosten des Projektors.

### Kurze Beschreibung der Zeichnung

Die Erfindung ist anhand eines in der Zeichnung dargestellten Ausführungsbeispiels im Folgenden näher beschrieben. Es zeigen:
- Fig. 1: ein Blockschaltbild eines Sichtsystems zur Darstellung synthetisch generierter Bilder zur Stimulation einer Nachtsichtbrille (NVG: Night Vision Goggles),
- Fig. 2: ein Diagramm der spektralen Empfindlichkeit der Nachtsichtbrille im Sichtsystem gemäß Fig. 1,
- Fig. 3: ein Blockschaltbild des um einen weiteren NVG-Kanal erweiterten Sichtsystems gemäß Fig. 1.

### Wege zur Ausführung der Erfindung

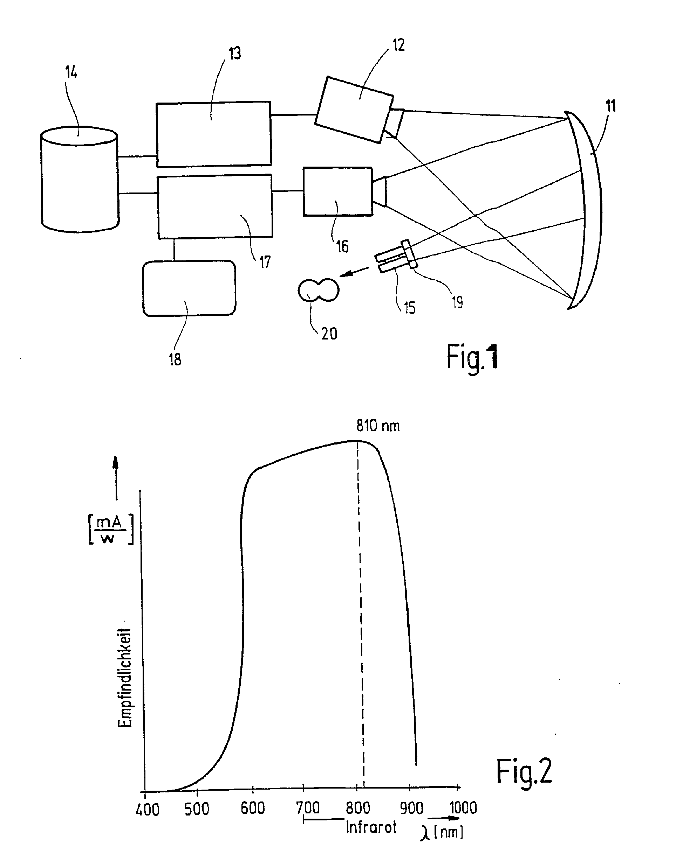

Das in Fig. 1 im Blockschaltbild skizzierte Sichtsystem findet vorzugsweise Anwendung in Flugsimulatoren zum Trainieren von Piloten im Tages- und Nachtflug. Der gleiche Aufbau kann aber auch in Verbindung mit anderen Übungssimulatoren, in denen Nachtsichtbedingungen auftreten, eingesetzt werden, z. B. in Simulatoren für Landfahrzeuge oder für die taktische Ausbildung und Aufklärung. Im Flugsimulator sitzt der Pilot im nachgebildeten Cockpit eines Flugzeugs oder eines Hubschraubers und sieht durch mindestens ein Fenster im Cockpit auf mindestens einen außerhalb des Cockpit angeordneten Projektionsschirm, auf dem fortlaufend ein auf die Flugbewegung synchronisiertes Bild eines Umgebungsszenarios, das in realiter der Sicht durch das mindestens eine Cockpitfenster hindurch (OTW: out of the window) entspricht, projiziert wird.

Das Sichtsystem umfasst daher in bekannter Weise mindestens einen Projektionsschirm 11 , mindestens einen dem Projektionsschirm 11 zugeordneten Projektor 12, einen Bildgenerator 13 zur Erzeugung von Bildsignalen eines synthetischen, sichtbaren, farbigen Bildes und eine Datenbasis 14 mit abgespeicherten Geländemodellen, Objektmodellen und Texturen sowie Steuerdaten zur Koordinierung der Steuerung des Flugzeugs und des Sichtsystems. Der Bildgenerator 13 greift auf die Datenbasis 14 zu und erzeugt Bildsignale eines ausgewählten Szenarios für Tag- oder Nachtsicht mit dem bloßen Auge, der sog. OTW(out of the window)-Sicht. Die Bild- oder Videosignale werden in den Projektor 12 eingespeist und von dem Projektor 12 auf dem Projektionsschirm 11 visualisiert.

Für bestimmte Anwendungsbereiche wird das Training von Nachtflügen mit Nachtsichtgeräten, im hier speziellen Fall mit Nachtsichtbrillen (NVG: Night Vision Goggles), gefordert. Die Nachtsichtbrille 15 ist z.B. am Helm eines Hubschrauberpiloten befestigt und ermöglicht sowohl den Blick durch die Nachtsichtbrille 15 als auch eine periphere Sicht mit bloßem Auge seitlich und nach unten an der Nachtsichtbrille 15 vorbei, so dass der Pilot auch mit bloßem Auge Teile des auf dem mindestens einen Projektionsschirm 11 als Nachtszenario dargestellten, sichtbaren Bildes erkennen sowie die Cockpit-Instrumente ablesen kann.

Zur Stimulation der originalen Nachtsichtbrille 15 durch das auf den Bildschirm projizierte Bild so, dass dem Piloten ein realitätsgetreues Abbild 20 des durch die Nachtsichtbrille 15 erkennbaren Bildausschnitts angeboten wird, weist das Sichtsystem zusätzlich einen Laserprojektor 16 für die Projektion eines für d as bloße Auge unsichtbaren und nur mit der Nachtsichtbrille 15 sichtbaren Bildes auf, das ebenfalls auf den Projektionsschirm 11 projiziert und dem auf den Bildschirm projizierten, sichtbaren Bild der Nachtszene überlagert wird. Ein solcher Projektionskanal wird nachfolgend als NVG-Kanal bezeichnet. Das zum Betrachten durch die Nachtsichtbrille 15 projizierte Bild, das sog. NVG-Bild wird mindestens in gleicher Größe wie das sichtbare Bild der Nachtszene projiziert und nicht nur in der Größe des mit der Nachtsichtbrille 15 erfassbaren Bildausschnitts, so dass der Pilot durch Schwenken seines Kopfes das gesamte Bild nach und nach ausschnittweise zu betrachten vermag. Der Laserprojektor 16 weist eine einen Laserstrahl erzeugende Laserquelle mit einer im unsichtbaren Spektralbereich der spektralen Empfindlichkeit der Nachtsichtbrille 15 liegenden Lichtwellenlänge λ auf.

In Fig. 2 ist beispielhaft ein Diagramm des Verlaufs der spektralen Empfindlichkeit einer bei militärischen Einsätzen üblicherweise verwendeten Nachtsichtbrille dargestellt. Wie aus Fig. 2 ersichtlich ist, liegt die spektrale Empfindlichkeit der Nachtsichtbrille hier zwischen ca. 625 nm und ca. 900 nm, erstreckt sich also von dem sichtbaren Rotbereich bis in den unsichtbaren Infrarotbereich hinein. Die Lichtwellenlänge λ der Laserlichtquelle ist nun so gewählt, dass sie in einem Bereich zwischen λ=810 nm und λ=830 nm liegt, der mit dem bloßen Auge nicht mehr sichtbar ist und bei dem vorzugsweise die Nachtsichtbrille 15 ihr Empfindlichkeitsmaximum aufweist.

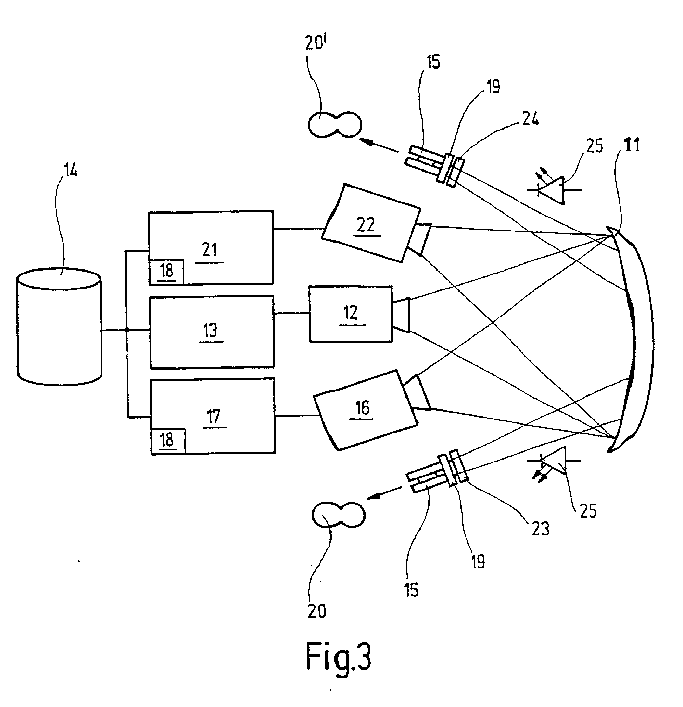

Im dargestellten Ausführungsbeispiel des Sichtsystems ist dem Laserprojektor 16 ein separater Bildgenerator 17 zugeordnet, der, wie der Bildgenerator 13 für das sichtbare Bild, auf die Datenbasis 14 zugreift. In der Datenbasis 14 sind neben den Daten für die Bildgenerierung auch spezifische Daten für Nachtsichtbrillen wie Material- und Reflexionseigenschaften, abgespeichert. Der Bildgenerator 17 greift außerdem auf eine Transformationseinheit 18 zu, in der spezifische Darstellungscharakteristiken des benutzten Nachsichtbrillen-Typs, Parameter des Sichtsystems und Parameter für besondere Effekte abgespeichert sind. Die Transformationseinheit 18 kann alternativ in dem Bildgenerator 17 integriert sein, wie dies in Fig. 3 symbolisch angedeutet ist. Der Bildgenerator 17 erzeugt Bildsignale, die ggf- modifiziert mit der Transformationseinheit 18 entnommenen Daten dem Licht der Laserquelle mit der Lichtwellenlänge λ im Infrarotbereich aufmoduliert werden. Die Laserquelle des Laserprojektors 16 weist vorzugsweise eine Laserdiode auf, die in einfacher Weise mit den Bildsignalen leistungsmoduliert werden kann. Als Laserdiode wird vorzugsweise eine GaS-Laserdiode verwendet.

Wie in Fig. 1 schematisch skizziert ist, ist der Nachtsichtbrille 15 ein an die Lichtwellenlänge λ, der Laserquelle des Laserprojektors 16 angepasstes, schmalbandiges Interferenzfilter 19 vorgesetzt. Bevorzugt wird die Transmissionswellenlänge des Interferenzfilters 19 gleich der Lichtwellenlänge λ der Laserquelle gewählt und die Bandbreite des Interferenzfilters 19 der Stabilität der gewählten Lichtwellenlänge λ der Laserquelle angepasst. Wird beispielhaft die Lichtwellenlänge λ der Laserquelle im Bereich zwischen λ=810 nm und λ=830 nm gewählt, so wird die Bandbreite des Interferenzfilters 19 mit ca10 - 30 nm festgelegt. Durch das Interferenzfilter 19 werden Stör- und Fremdlichteinflüsse in der Nachtsichtbrille 15 unterdrückt, so dass sowohl in der Nachtsichtbrille 15 die OTW-Sicht unterdrückt wird als auch mit der Nachtsichtbrille 15 ein Flugtraining unter Nachtsichtbedingung bei Tageslicht möglich ist und der Simulationsraum nicht abgedunkelt zu werden braucht. Die Notwendigkeit des Vorsehens einer speziellen Instrumenten-und Cockpitbeleuchtung, die kompatibel mit der Nachtsichtbrille 15 ist, entfällt.

Selbstverständlich ist es möglich, die Projektion des Infrarot-Bildes für das Nachtsichtgerät auch als Stand-alone- Equipment, also ohne zusätzliche Projektion der OTW-Sicht, zu betreiben. In diesem Fall entfallen der Bildgenerator 13 und der Projektor 12.

Auch ist es möglich, in dem in Fig. 1 dargestellten Sichtsystem auf den Bildgenerator 17 für den Laserprojektor 16 zu verzichten. In diesem Fall werden die Bildsignale für den Laserprojektor 16 von dem Bildgenerator 13 abgeleitet, der die Nachtszene für das OTW-Bild generiert. Diese Bildsignale werden vor Einspeisen in den Laserprojektor 16 anhand der in der Transmissionseinheit 18 abgespeicherten Parameter modifiziert.

Das in Fig. 3 im Blockschaltbild dargestellte Sichtsystem unterscheidet sich von dem Blockschaltbild gemäß Fig. 1 lediglich durch einen zweiten NVG-Kanal, so dass gleiche Bauteile mit gleichen Bezugszeichen versehen sind. Dieses Sichtsystem trägt der Tatsache Rechnung, dass Pilot und Co-Pilot gleiche Bildausschnitte auf dem Projektionsschirm 11 mit differierenden Sichtwinkeln sehen. Für den Co-Piloten wird daher ein zusätzlicher NVG-Kanal, bestehend aus einem Bildgenerator 21 (mit integrierter Transformationseinheit 18) und einen weiteren Laserprojektor 22 für die Bildprojektion, vorgesehen. Bildgenerator 21 und Laserprojektor 22 sind identisch dem Bildgenerator 17 und Laserprojektor 16 für den Piloten ausgebildet. Der Bildgenerator 21 greift ebenfalls auf die Datenbasis 14 zu und generiert eine gleiche Bildszene wie der Bildgenerator 17, die jedoch auf den Augenpunkt des Co-Piloten bezogen ist und nicht - wie das vom Bildgenerator 17 generierte Bild - auf den Augenpunkt des Piloten. Die beiden Laserprojektoren 16 und 22 weisen orthogonale Polarisationsrichtungen auf, so dass das vom Laserprojektor 22 projizierte NVG-Bild gegenüber dem vom Laserprojektor 16 projizierte NVG-Bild um 90° gedreht ist. Der Co-Pilot hat die gleiche Nachtsichtbrille 15 mit vorgesetztem Interferenzfilter 19 wie der Pilot. Jedem der beiden Nachtsichtbrillen 15 ist ein Polarisationsfilter 23 bzw. 24 vorgesetzt, wobei die Polarisationsrichtungen der beiden Polarisationsfilter 23, 24 um 90° gegeneinander gedreht sind und die Polarisationsrichtung des Polarisationsfilters 23 mit der Polarisationsrichtung des Laserprojektors 16 und die Polarisationsrichtung des Polarisationsfilters 24 mit der Polarisationsrichtung des Laserprojektors 22 übereinstimmt. Durch die beiden Polarisationsfilter 23, 24 ist sichergestellt, dass der Pilot mit seiner Nachtsichtbrille 15 nur das vom Laserprojektor 16 projizierte, auf seinen Augenpunkt bezogene NVG-Bild und der Co-Pilot durch seine Nachtsichtbrille 15 nur das vom Laserprojektor 22 projizierte, auf seinen Augenpunkt bezogene NVG-Bild bildausschnittweise über den gesamten Projektionsschirm 11 hinweg sehen kann. Das dem Co-Piloten durch seine Nachtsichtbrille 15 angebotene, realitätsgetreue Abbild eines Bildausschnitts des auf den Augenpunkt des Co-Piloten bezogenen NVG-Bildes ist in Fig. 3 mit 20' bezeichnet.

Um die Stimulation der Nachtsichtbrille 15 auch bezüglich der Cockpit- und/oder Instrumentenbeleuchtung zu verbessern, sind im Cockpit mehrere Infrarot-Leuchtdioden 25 verteilt angeordnet, deren emittiertes Licht nur durch die Nachtsichtbrille 15 hindurch gesehen werden kann. Als Infrarot-Leuchtdioden 25 werden beispielsweise Galliumarsenid (GaS)-Leuchtdioden eingesetzt.

## Patentansprüche

1. Sichtsystem zur Darstellung synthetisch generierter Bilder für die Stimulation von Nachtsichtgeräten, insbesondere in Übungssimulatoren zum Trainieren des Führens von Fahr- und Fluggeräten sowie von Aufklärungs- und Observationsoperationen unter Nachtsichtbedingungen, mit mindestens einem Bildgenerator (17) zur Erzeugung von Bildsignalen eines synthetischen Bildes, mit mindestens einem mit den Bildsignalen gespeisten Projektor (16) zum Projizieren des Bildes auf mindestens einen Projektionsschirm (11) und mit einem Nachtsichtgerät (15) zum Betrachten des projizierten Bildes, wobei der mindestens eine Projektor (16) eine einen Laserprojektionsstrahl erzeugende Laserquelle aufweist, die Laserlicht mit einer im nicht sichtbaren Spektralbereich und innerhalb der spektralen Empfindlichkeit des Nachtsichtgeräts (15) liegenden Lichtwellenlänge (λ) aussendet, und dem Laserlicht die Bildsignale aufmoduliert sind, **dadurch gekennzeichnet, dass** dem Nachtsichtgerät (15) ein an die Lichtwellenlänge (λ) der Laserquelle angepasstes, schmalbandiges Interferenzfilter (19) vorgesetzt ist, die Transmissionswellenlänge (λ) des Interferenzfilters (19) gleich der Lichtwellenlänge (λ) der Laserquelle ist und
dass die Bandbreite des Interferenzfilters (19) an die Stabilität der Laserquelle angepasst ist und 10 nm bis 30 nm beträgt.

2. Sichtsystem nach Anspruch 1, **dadurch gekennzeichnet, dass** das vom Projektor (16) zum Betrachten mit dem Nachtsichtgerät (15) auf den Projektionsschirm (11) projizierte Bild wesentlich flächengrößer ist als der im Nachtsichtgerät (15) abgebildete Bildausschnitt.

3. Sichtsystem nach Anspruch 1 oder 2, **dadurch gekennzeichnet, dass** die Lichtwellenlänge (λ) der Laserquelle im Infrarotbereich und vorzugsweise dort im Bereich der maximalen Empfindlichkeit des Nachtsichtgeräts (15) liegt.

4. Sichtsystem nach Anspruch 3, **dadurch gekennzeichnet, dass** die Lichtwellenlänge (λ) der Laserquelle im Bereich zwischen 810 nm und 830 nm liegt.

5. Sichtsystem nach einem der Ansprüche 1 - 4, **dadurch gekennzeichnet, dass** die Laserquelle eine Laserdiode, vorzugsweise eine Galliumarsenid (GaS)-Laserdiode, ist.

6. Sichtsystem nach einem der Ansprüche 1 - 4, **dadurch gekennzeichnet, dass** dem Nachtsichtgerät (15) ein Polarisationsfilter (23) vorgesetzt ist und dass der Projektor (16) eine mit der Polarisationsrichtung des Polarisationsfilters (23) übereinstimmende Polarisationsrichtung aufweist.

7. Sichtsystem nach Anspruch 6, **dadurch gekennzeichnet, dass** ein zweiter Projektor (22) mit zum ersten Projektor (16) orthogonaler Polarisationsrichtung vorgesehen ist, der ein von von dem ersten Projektor (16) projizierten Bild abweichendes Bild auf den Bildschirm projiziert, und dass ein zweites Nachtsichtgerät (15) mit einem vorgesetzten Polarisationsfilter (24) vorgesehen ist, dessen Polarisationsrichtung gegenüber dem dem ersten Projektor (16) vorgesetzten Polarisationsfilter (23) um 90° gedreht ist.

8. Sichtsystem nach Anspruch 7, **dadurch gekennzeichnet, dass** beide von den Projektoren (16, 22) projizierte Bilder eine gleiche Nachtszene darstellen, die in jedem Bild auf einen anderen Augenpunkt bezogen generiert ist.

9. Sichtsystem nach einem der Ansprüche 1 - 8, **dadurch gekennzeichnet, dass** innerhalb des mit dem Nachtsichtgerät (15) sukzessive erfassbaren Raumbereichs vor dem Projektionsschirm (11) Infrarot-Leuchtdioden (25) angeordnet sind.

## Claims

1. Vision system for representing synthetically generated images for the stimulation of night vision devices, in particular in practice simulators for training the operation of vehicles and aircraft and reconnaissance and observation operations under night vision conditions, comprising at least one image generator (17) for generating image signals of a synthetic image, comprising at least one projector (16) supplied with the image signals and serving for projecting the image onto at least one projection screen (11), and comprising a night vision device (15) for viewing the projected image, wherein the at least one projector (16) has a laser source which generates a laser projection beam and which emits laser light having a light wave length (λ) lying in the non-visible spectral range and within the spectral sensitivity of the night vision device (15), and the image signals are modulated on the laser light, **characterized in that** a narrowband interference filter (19) adapted to the light wavelength (λ) of the laser source is attached in front of the night vision device (15), the transmission wavelength (λ) of the interference filter (19) is equal to the light wavelength (λ) of the laser source, and
**in that** the bandwidth of the interference filter (19) is adapted to the stability of the laser source and is 10 nm to 30 nm.

2. Vision system according to Claim 1, **characterized in that** the image projected onto the projection screen (11) by the projector (16) for viewing with the night vision device (15) has a significantly larger area than the image exert imaged in the night vision device (15).

3. Vision system according to Claim 1 or 2, **characterized in that** the light wavelength (λ) of the laser source lies in the infrared range and there preferably in the range of the maximum sensitivity of the night vision device (15).

4. Vision system according to Claim 3, **characterized in that** the light wavelength (λ) of the laser source lies in the range of between 810 nm and 830 nm.

5. Vision system according to any of Claims 1-4, **characterized in that** the laser source is a laser diode, preferably a gallium arsenide (GaS) laser diode.

6. Vision system according to any of Claims 1-4, **characterized in that** a polarization filter (23) is attached in front of the night vision device (15), and **in that** the projector (16) has a direction of polarization corresponding to the direction of polarization of the polarization filter (23).

7. Vision system according to Claim 6, **characterized in that** a second projector (22) having a direction of polarization orthogonal to the first projector (16) is provided, which second projector projects an image deviating from the image projected by the first projector (16) onto the screen, and **in that** a second night vision device (15) having a polarization filter (24) attached in front is provided, the direction of polarization of which filter is rotated by 90° relative to the polarization filter (23) attached in front of the first projector (16).

8. Vision system according to Claim 7, **characterized in that** both images projected by the projectors (16, 22) represent an identical night scene that is generated relative to a different eye point in each image.

9. Vision system according to any of Claims 1-8, **characterized in that** infrared light-emitting diodes (25) are arranged within the spatial region progressively detectable by means of the night vision device (15) in front of the projection screen (11).

## Revendications

1. Système de vision permettant de représenter des images générées de façon synthétique pour la simulation d'appareils de vision de nuit, notamment dans des simulateurs d'entraînement permettant de s'entraîner à la conduite d'appareils roulants et volants ainsi que pour des opérations d'éclairage et d'observation dans des conditions de vision de nuit, avec au moins un générateur d'images (17) permettant de produire les signaux d'image d'une image synthétique, avec au moins un projecteur (16) recevant les signaux d'image pour projeter l'image sur au moins un écran de projection (11) et avec un appareil de vision de nuit (15) permettant de prendre connaissance de l'image projetée, l'au moins un projecteur (16) comportant une source de laser produisant un faisceau de projection par laser, émettant de la lumière laser à une longueur d'onde de lumière (λ) située dans la zone spectrale non visible et à l'intérieur de la sensibilité spectrale de l'appareil de vision de nuit (15) et les signaux d'image étant modulés en fonction de la lumière laser, **caractérisé en ce qu'**un filtre d'interférence (19) à bande étroite adapté à la longueur d'onde de lumière (λ) de la source de laser est placé en amont de l'appareil de vision de nuit (15), la longueur d'onde de transmission (λ) du filtre d'interférence (19) étant égale à la longueur d'onde de lumière (λ) de la source de laser et **en ce que** la largeur de bande du filtre d'interférence (19) est adaptée à la stabilité de la source de laser et s'étend de 10 nm à 30 nm.

2. Système de vision selon la revendication 1, **caractérisé en ce que** l'image projetée par le projecteur (16) pour en prendre connaissance sur l'écran de projection (11) à l'aide de l'appareil de vision de nuit (15) présente une surface essentiellement plus importante que celle du détouré d'image représenté dans l'appareil de vision de nuit (15).

3. Système de vision selon la revendication 1 ou 2, **caractérisé en ce que** la longueur d'onde de lumière (λ) de la source de laser se situe dans la région d'infrarouge et de préférence, dans cette région, dans la région de sensibilité maximale de l'appareil de vision de nuit (15).

4. Système de vision selon la revendication 3, **caractérisé en ce que** la longueur d'onde de lumière (λ) de la source de laser se situe dans la région prévue entre 810 nm et 830 nm.

5. Système de vision selon l'une quelconque des revendications 1 à 4, **caractérisé en ce que** la source de laser est une diode à rayonnement laser, de préférence une diode à rayonnement laser émis par l'arséniure de gallium (GaS).

6. Système de vision selon l'une quelconque des revendications 1 à 4, **caractérisé en ce qu'**un filtre de polarisation (23) est placé en amont de l'appareil de vision de nuit (15) et que le projecteur (16) comporte une direction de polarisation coïncidant avec la direction de polarisation du filtre de polarisation (23).

7. Système de vision selon la revendication 6, **caractérisé en ce qu'**un deuxième projecteur (22) présentant une direction de polarisation perpendiculaire au premier projecteur (16) est prévu, ledit deuxième projecteur projetant une image différant de l'image projetée par le premier projecteur (16) sur l'écran et **en ce qu'**un deuxième appareil de vision de nuit (15) doté d'un filtre de polarisation (24) placé en amont est prévu dont la direction de polarisation est pivotée de 90° par rapport au filtre de polarisation (23) placé en amont du premier projecteur (16).

8. Système de vision selon la revendication 7, **caractérisé en ce que** les deux images projetées par les projecteurs (16, 22) représentent une même scène nocturne générée sur chaque image en se référant à un autre point oculaire.

9. Système de vision selon l'une quelconque des revendications 1 à 8, **caractérisé en ce que** des diodes d'éclairage à infrarouge (25) sont disposées à l'intérieur de la région de l'espace située devant l'écran de projection (11) et pouvant être détectée successivement par l'appareil de vision de nuit (15).
